# EUROPEAN PATENT APPLICATION

(11) **EP 4 125 287 A1**
(43) Date of publication of application: **01.02.2023**
(21) Application number: 22186281.6
(22) Date of filing: 21.07.2022
(51) Int. Cl.: H04W 16/14, H04W 88/08, H04W 24/02

(54) **DYNAMIC SHARED CELL GROUPS**

(30) Priority: 26.07.2021 US 202163225708 P; 15.07.2022 US 202217865998
(71) Applicant: Mavenir Networks, Inc., Richardson, TX 75081 (US)
(72) Inventor: PINHEIRO, Ana Lucia, Philadelphia, 19103 (US); LEELAHAKRIENGKRAI, Rangsan, Allen, 75013 (US)
(74) Representative: Studio Torta S.p.A.

(57) **Abstract**

A Shared Cell (SC) Controller uses deployment information, radio resource utilization measurements, cell load measurements, signal quality measurement, operator's policies and radio capabilities to make decisions on system configuration, reconfiguration, and channel allocation related to the Shared Cell groups. The SC Controller may also use artificial intelligence/machine learning to predict future system state when making decisions on system configuration and channel allocation. The SC Controller can be implemented in the context of using a CBRS system, the ORAN architecture, and the Shared Cell group of Radio Units (RUs). SC Controller can be implemented as part of the Non-Real Time Radio Intelligent Controller (Non-RT RIC). The SC Controller interfaces with the Citizens Broadband Radio Service Device (CBSD) Controller, and the SC Controller sends the Shared Cell group information to the O-RU Controller so that the O-RU Controller can configure the radio components.

## Description

### BACKGROUND OF THE DISCLOSURE

### 1. Field of the Disclosure

The present disclosure relates to systems and methods for Radio Access Networks (RANs) and relates more particularly to using Open RAN (O-RAN) Shared Cells (SC) groups.

### 2. Description of the Related Art

### CBRS Summary

One of the technologies recently standardized is operation over shared spectrum such as Citizens Broadband Radio Service (CBRS) band in the U.S. from 3.55 GHz - 3.7 GHz. Similar shared spectrum paradigms also exist in other countries. CBRS opens new ways to use spectrum in the 3.5 GHz band in the US by sharing spectrum across legacy and new users. There are 3 tiers of users sharing the CBRS band. The first tier includes "incumbents," who are legacy/existing users of the CBRS band, e.g., military ship-borne radars in coastal areas, military ground-based radars, fixed satellite services (FSS) receive-only earth stations (35 sites around US, mostly in coastal areas), and Grandfathered Wireless Broadband Licensees (GWBL). The second tier includes Priority Access License (PAL) users, who are CBRS Devices (CBSDs) having one or more licenses to use a portion of the CBRS band. PAL users, who have a lower priority than incumbents, are restricted to a total of 70 MHz within 3.55 - 3.65 GHz band in the CBRS band. The third tier includes General Authorized Access (GAA) users, who are CBSDs using the CBRS band without holding a license. GAA users, who have a lower priority than PAL users, are the lowest tier of the 3-tier architecture. GAA users can only use the spectrum if no incumbents or PAL users are using the channel at a given location. GAA users have access to the entire 150 MHz of the CBRS band.

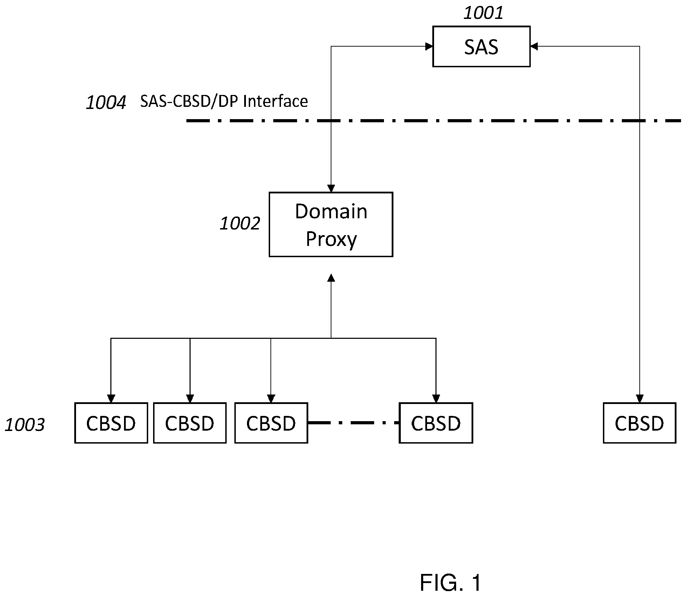

FIG. 1 shows the main components of the CBRS architecture: The Spectrum Access System (SAS) 1001, the Domain Proxy (DP) 1002, and the CBSDs 1003. CBSD includes, e.g., fixed station(s) and/or radio(s), or networks of such stations or radios, that operate on a PAL or GAA basis consistent with the regulations specified in Title 47 of the Code of Federal Regulations (CFR), § 96. For CBSDs which comprise multiple nodes or networks of nodes, CBSD requirements apply to each node even if network management and communication with the SAS is accomplished via a single network interface.

CBSDs obtain Grants from the SAS 1001 via the SAS-CBSD interface 1004. This may be done with the assistance of a DP 1002 in the communication path, or directly between SAS 1001 and CBSDs 1003. The DP 1002 is a logical entity engaging in communications with the SAS 1001 on behalf of multiple individual CBSDs 1003 or networks of CBSDs. The DP 1002 can also provide a translational capability to interface legacy radio equipment in the 3650-3700 MHz band with a SAS 1001 to ensure compliance with the regulations specified in Title 47 of the Code of Federal Regulations (CFR), § 96 (hereinafter referred to as 47 CFR § 96). The DP 1002 presents a consistent and secure interface to the SAS that can convey all messages pertaining to the SAS-CBSD interface 1004 for client CBSDs 1003. CBSD aggregation and proxy function for large networks can be integrated within a Service Management and Orchestration (SMO) system or in a standalone node. SAS 1001 is a system that authorizes and manages use of spectrum for the CBRS in accordance with the regulations specified in 47 CFR § 96.

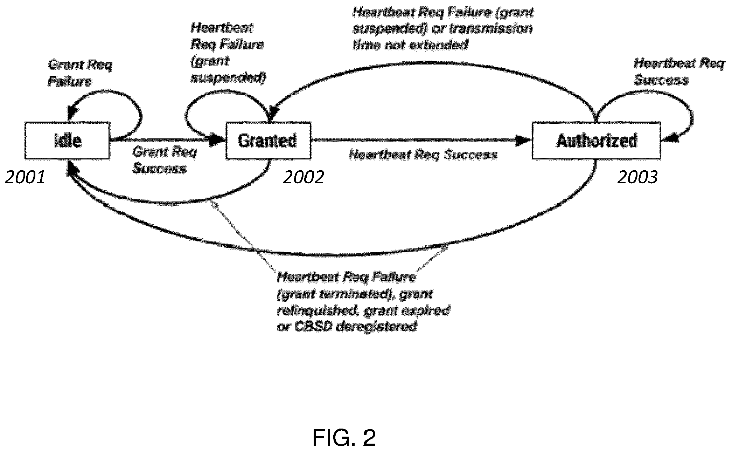

FIG. 2 shows an example Grant state machine. Each Grant, represented by a GrantId, has their own state machine. A Grant state machine is in the Idle state 2001 if a Grant has not been approved by the SAS. A CBSD can send the SAS a GrantRequest object. If a Grant request is approved by the SAS, the SAS will send a GrantResponse object. Upon reception of a successful GrantResponse object from the SAS, the Grant transitions to Granted state 2002. In Granted state a GrantId is assigned, operational parameters are defined, and a channel is allocated. A CBSD with a Grant that is ready to commence RF transmission commences Heartbeat procedure associated with the Grant by sending Heartbeat Request object. If the SAS approves a Heartbeat Request, the SAS sends a Heartbeat Response object authorizing the transmission. Upon reception of a successful Heartbeat Response object, the Grant transitions to the Authorized state 2003. In the Authorized state 2003, the CBSD is permitted to commence RF transmission and operate in the CBRS band using the operational parameters specific to that Grant. If a CBSD receives multiple Grants, individual state machines are kept for each Grant, and individual heartbeat requests need to be sent for each Grant, possibly aggregated in a single transmission to the SAS.

The Grant transitions from the Authorized state 2003 back to the Granted state 2002 if the Grant is suspended by the SAS or the transmission right, as defined by the transmitExpireTime parameter in the Heartbeat Response object, has expired. The Grant transitions to Idle state 2001 if a Grant is terminated by the SAS, relinquished by the CBSD, or expired as defined in the grantExpireTime parameter, or the SAS to CBSD connectivity is lost. The example Grant state machine shown in FIG. 2 can be in accordance with, e.g., Wireless Innovation Forums' technical specification WINNF-TS-0016.

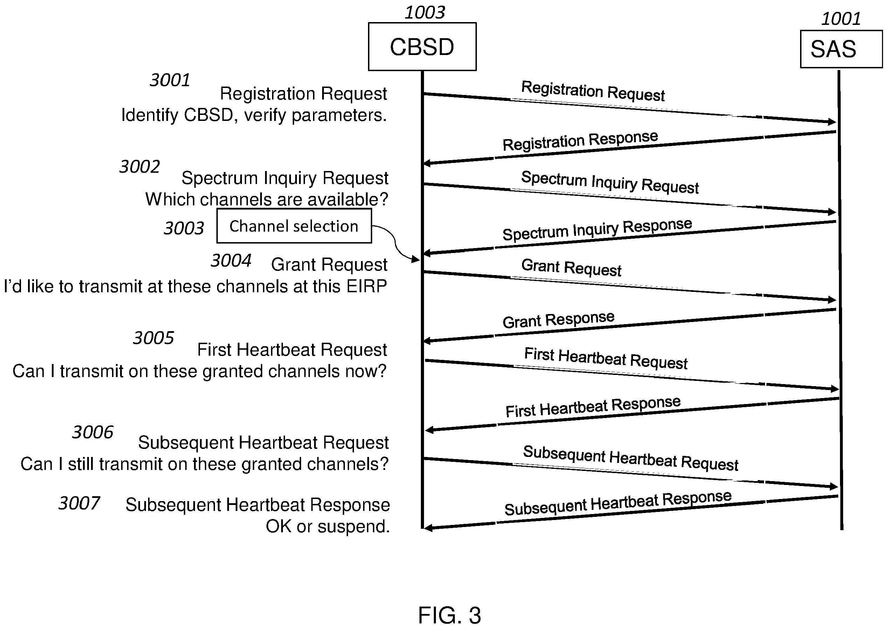

FIG. 3 depicts the CBRS procedures. When the CBSD device (or O-RU) starts-up, it will register with the SAS 1001 by sending a Registration Request object, as referenced by 3001. The Registration Request includes operational parameters of the O-RU, including its physical location (latitude, longitude, altitude). The SAS 1001 will accept the registration by sending a Registration Response object. In order to be able to find out which channels are available in the area where the CBSD wants to transmit, the CBSD performs the Spectrum Inquiry procedure, as referenced by 3002. The CBSD sends the Spectrum Inquiry object to the SAS with a list of channels of interest. The Spectrum Inquiry Response includes all available channels in the transmission area. The transmission area is defined based on the physical location of the CBSD.

Based on the available channels, the CBSD now chooses one or more channels, as referenced by 3003 in FIG. 3, and requests a Grant via the Grant Request procedure, as referenced by 3004. If the request is Granted by the SAS, after the reception of the Grant Response object, the CBSD starts the Heartbeat procedure by sending the first Heartbeat Request object, as referenced by 3005. The Grant Response object will also include the maximum power that the O-RU can transmit. This is to limit possible interference in the CBRS band.

After the first successful Heartbeat Response is received from the SAS, the CBSD (O-RU) may start transmitting in the channel associated with that grant. The CBSD keeps sending a subsequent Heartbeat Request object periodically to the SAS, as referenced by 3006, as a form of "keep alive" mechanism. The procedure continues and the O-RU may continue transmitting in the channel until the SAS suspends or terminates the grant via a subsequent Heartbeat Response object asking for such suspension or termination, as referenced by 3007. Additionally, if the CBSD decides to stop transmitting, the CBSD 1003 will send a Grant Relinquishment object to the SAS 1001 to notify the SAS that it no longer needs the channel associated with that grant.

The Domain Proxy (DP) 1002 is the entity that can handle the CBRS procedures with the SAS 1001 on behalf of the CBSDs 1003. The basic functionality of the DP is to be a "proxy" for the CBSD. Part of this includes the aggregation of the information coming from/to several CBSDs to/from the SAS. This reduces the number of messages and the number of connections that need to be established between the SAS and the CBSDs. Additionally, this helps by offloading the CBRS functionality from the O-RU to the DP. As an example, the O-RU does not need to keep sending periodic Heartbeat Request objects to the SAS, since the DP will handle that procedure on behalf of the O-RU.

### O-RAN Summary

Conventional RANs were built employing an integrated unit where the entire RAN was processed. Conventional RANs implement the protocol stack (e.g., Physical Layer (PHY), Media Access Control (MAC), Radio Link Control (RLC), Packet Data Convergence Control (PDCP) layers) at the base station (also referred to as the evolved node B (eNodeB or eNB) for 4G LTE or next generation node B (gNodeB or gNB) for 5G NR). In addition, conventional RANs use application specific hardware for processing, which make the conventional RANs difficult to upgrade and evolve. As future networks evolve to have massive densification of networks to support increased capacity requirements, there is a growing need to reduce the capital costs (CAPEX) and operating costs (OPEX) of RAN deployment and make the solution scalable and easy to upgrade.

Cloud-based Radio Access Networks (CRANs) are networks where a significant portion of the RAN layer processing is performed at a baseband unit (BBU), located in the cloud on commercial off the shelf servers, while the radio frequency (RF) and real-time critical functions can be processed in the remote radio unit (RRU), also referred to as the radio unit (RU). The BBU can be split into two parts: centralized unit (CU) and distributed unit (DU). CUs are usually located in the cloud on commercial off the shelf servers, while DUs can be distributed. The BBU may also be virtualized, in which case it is also known as vBBU. Radio Frequency (RF) interface and real-time critical functions can be processed in the Radio Unit (RU), sometimes referred to as Remote Radio Unit (RRU).

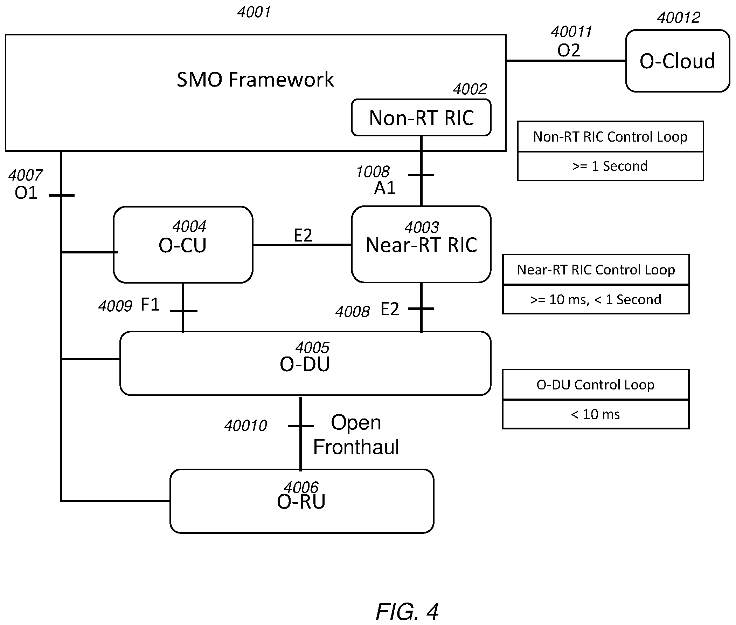

The O-RAN architecture is a Cloud-based architecture specified by the O-RAN Alliance. The architecture of the O-RAN system is specified in the technical specification O-RAN.WG1.O-RAN-Architecture-Description-v03.00. The high level logical architecture of O-RAN is depicted in FIG. 4. The components of the architecture include the Service Management and Orchestrator (SMO) Framework 4001, the Non-Real Time (Non-RT) Radio Intelligent Controller (RIC) 4002, the Near-Real Time (Near-RT) Radio Intelligent Controller (RIC) 4003, The O-RAN Centralized Unit (O-CU) 4004, the O-RAN Distributed Unit (O-DU) 4005, and the O-RAN Radio Unit (O-RU) 4006. The O-DU 4005 and the O-RU 4006 are connected by the Open Fronthaul 40010.

The Service Management and Orchestrator (SMO) Framework 4001 is responsible for the management of the O-RAN components (O-CU, O-DU and O-RU). The SMO uses the O2 interface 40011 to connected with the O-Cloud 40012. The management interface between the SMO and the O-RAN components is the O1 interface 4007.

The RAN Intelligent Controller (RIC) contains Radio Resource Management (RRM) functions that help control and optimize the components and the utilization of radio resources. It is divided in Non-Real Time RIC 4002 and Near-Real Time RIC 4003.

The Non-RT RIC 4002 is the functionality internal to the SMO 4001. Its primary goal is to support intelligent RAN optimization. It provides policy-based guidance, ML (Machine Learning) model management, and enrichment information to the Near-RT RIC function, supporting RRM (Radio Resource Management) optimizations of the Near-RT RIC. It can also perform intelligent RRM functions in non-real-time fashion (i.e., greater than 1 second). It communicates to the Near-RT RIC via the A1 interface 1008.

The Near-RT RIC 4003 is a logical function that enables near real-time control and optimization of radio components and resources via fine grained data collection and actions over the E2 interface 4008. Its control loops that operate in the order of 10ms to Is. The Near-RT RIC hosts one or more applications that use E2 interface 4008 to collect near real-time information (e.g. on a UE basis or a Cell basis) and provide value added services. The Near-RT RIC control over the radio components is steered via the policies and the enrichment data provided via A1 interface 1008 from the Non-RT RIC 4002.

The data between the O-CU 4004 and O-DU 4005 is carried over the F1 interface 4009. The O-DU is responsible for scheduling the data transmission over the air, and the O-DU scheduler runs a control loop in the order of milliseconds (< 10ms). The data between O-DU and O-RU is sent over the open fronthaul interface.

The Near-RT RIC 4003 decisions are based on its internal functions or applications, the configuration received over O1 interface 4007 and the temporary policies received over A1 interface 1008 from the Non-RT RIC 4002. In order to support the policy enforcement in the Near-RT RIC 4003, the Non-RT RIC 4002 can also provide enrichment information over the A1 interface 1008.

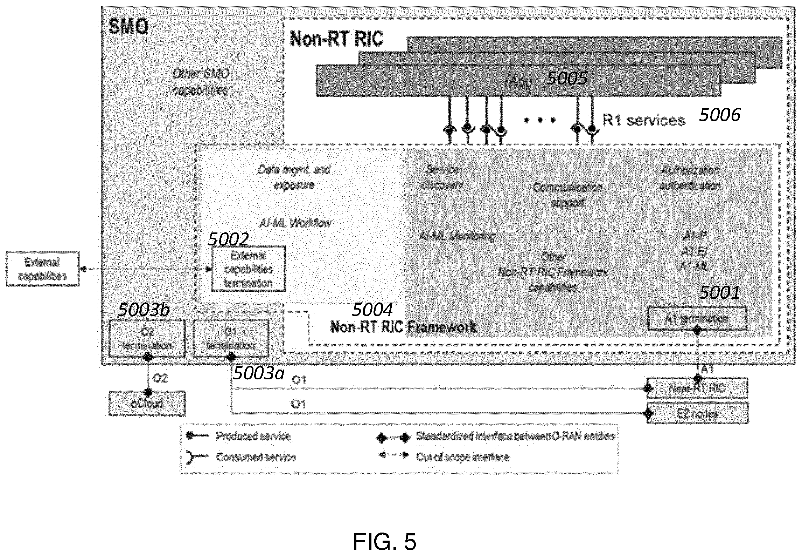

FIG. 5 depicts the Non-RT RIC domain. The Non-RT RIC domain illustrated in FIG. 5 can be in accordance with, e.g., technical specification O-RAN.WG2.Non-RT-RIC-ARCH-TR. The Non-RT RIC has two interfaces to other domains: The A1 (interface) termination 5001 to the Near-RT RIC and an external capabilities (interface) termination 5002 to access external functions and capabilities. Being part of the SMO, the Non-RT RIC may also indirectly utilize the O1 (interface) termination 5003a and O2 (interface) termination 5003b.

Within the Non-RT RIC domain, we find the Non-RT RIC Framework 5004 and the rApps 5005. Some of the Non-RT RIC Framework functions and services include providing policy-based guidance and enrichment information to the Near-RT RIC, data analytics, Artificial Intelligent (AI)/ Machine Learning (ML) training, inference for RAN optimization, and recommendations for configuration management actions over O1 interface.

The rApps 5005 are modular applications that leverage the functionality exposed by the Non-RT RIC to provide added value services relative to intelligent RAN optimization and operation. The Non-RT RIC framework functions provide services to rApps via the R1 (services) interface 5006. The R1 (services) interface 5006 is an Open application programming interface (API) interface.

The R1 (services) interface 5006 provides a level of abstraction such that an rApp that is a producer of data ("producer rApp") does not need to know whether there exists one or multiple consumers for that data, or the nature of that consumer. In other words, the "producer rApp" does not need to know if the consumer of the data is a "consumer rApp" or is an entity external to the Non-RT RIC or SMO). Additionally, the R1 (services) interface 5006 provides functionality such that a "consumer rApp" does not need to know if the data consumed is the product of a single entity (e.g., a single "producer rApp"), or the combined output of a complex chain of entities (e.g., a chain of rApps each consuming the value-added product of another).

### SUMMARY OF THE DISCLOSURE

A Shared Cell (SC) group is a group of Radio Units (RUs) which operate using the same channels (same component carriers) and same cell (same Physical Cell Identity), forming one "big cell".

Although example embodiments of the present disclosure are described in the context of the Open RAN (O-RAN) architecture and a CBRS system, the present disclosed is applicable to any wireless communication system and/or wireless communication architecture. Although the example embodiments of the present disclosure are described in the context of Shared Cell grouping concept from O-RAN, the present disclosure is applicable to any group of RUs using a similar concept, e.g., a Distributed Antenna System (DAS).

In accordance with the present disclosure, a new entity, Shared Cell (SC) Controller, uses deployment information, radio resource utilization measurements, cell load measurements, signal quality measurement, operator's policies and radio capabilities to make decisions on system configuration, re-configuration, and channel allocation related to the Shared Cell groups. The SC Controller may also use artificial intelligence/machine learning to predict future system state when making decisions on system configuration and channel allocation. The dynamic nature of the channel allocation in the CBRS system makes CBRS a great candidate to take advantage of the solution provided in the present disclosure.

This present disclosure provides the Shared Cell (SC) Controller as a new entity or function in a wireless communication system operating using CBRS spectrum or any other spectrum, licensed or unlicensed. The Shared Cell (SC) Controller uses deployment information, radio resource utilization measurements, cell load measurements, operator's policies and radio capabilities to make decisions on system configuration and channel allocation. The SC Controller may also use artificial intelligence (AI)/machine learning (ML) to predict future system state when making decisions on system configuration and channel allocation. In an O-RAN architecture, the SC Controller may be implemented as an application belonging to the SMO Framework, or an application belonging to the Non-RT RIC domain, such as an "rApp".

Shared cell definition: The operation for the same cell by several O-RUs.

The Shared Cell (SC) model as specified by the ORAN Alliance is the subject of the present disclosure. The Shared Cell Group is defined as a mode of operation of a group of O-RUs (O-RAN Radio Units), where all the O-RUs in the group use the same channel(s) (i.e., component carrier(s)) for transmission and reception. Each component carrier has a Physical Cell Identity (PCI) associated with it, and the same PCI is used in all the O-RUs in the group in that component carrier.

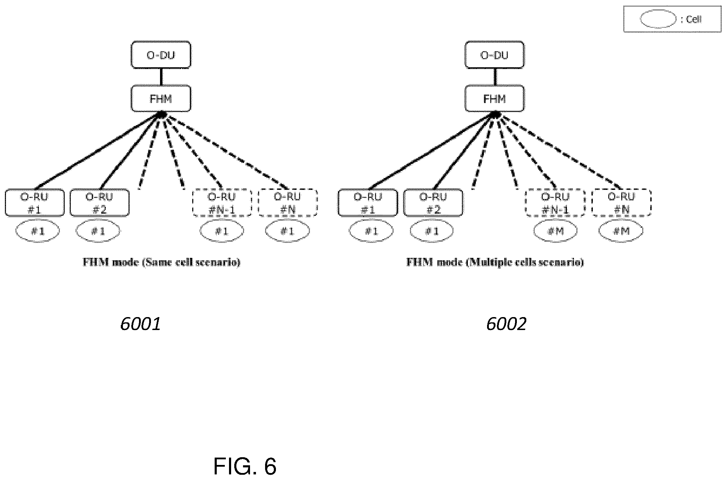

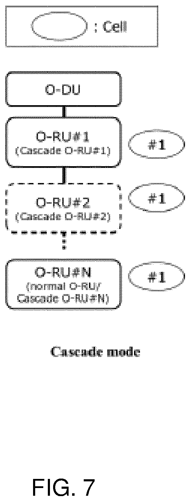

O-RAN defines 2 cases for realizing shared cell:
**1) FrontHaul Multiplexer (FHM) mode:** Shared cell is realized by a FHM and several O-RUs. In this case, the FHM is placed between the O-DU and the multiple O-RUs. FHM is modelled as an O-RU with LLS Fronthaul support (same as normal O-RU) and supporting "copy and combine" function (additional to normal O-RU). FHM does not have radio transmission/reception capability. For the copy and combine function, FHM may support selective transmission and reception function. FIG. 6 shows how each O-RU can be used for either operating in the same cell (Single Cell Scenario), as referenced by 6001, or in different cells (Multiple Cells Scenario), as referenced by 6002. This is achieved by configuring the FHM function accordingly. The scenarios illustrated in FIG. 6 can be implemented, e.g., in accordance with the technical specification O-RAN.WG1.O-RAN-Architecture-Description-v03.00.
**2) Cascade mode:** Shared cell is realized by several O-RUs cascaded in chain. In this case, which is illustrated in FIG. 7, one or more O-RU(s) are inserted between the O-DU and the O-RU. The O-RUs in the cascaded chain and the last O-RU supports the "copy and combine" function. In this case, all O-RUs operate the same cell. The cascade mode illustrated in FIG. 7 can be implemented, e.g., in accordance with the technical specification O-RAN.WG4.CUS.0-v05.00.

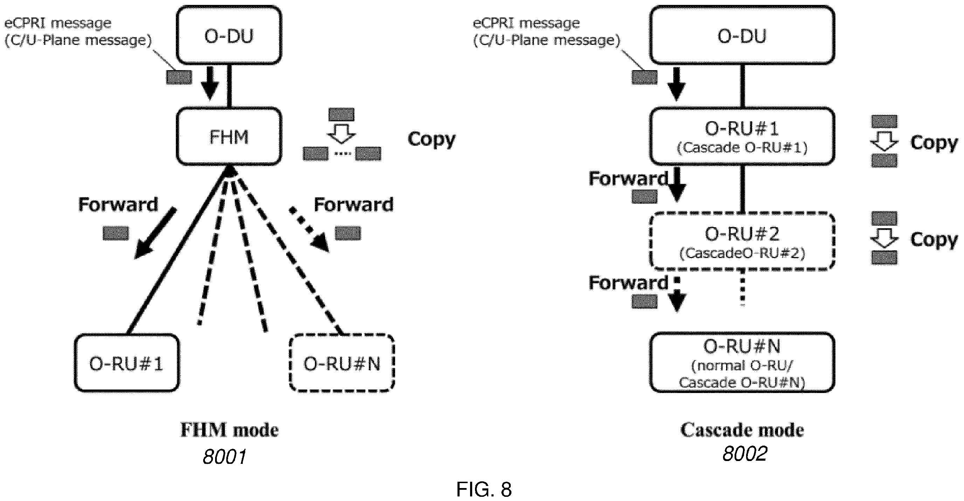

"Copy and combine" functionality is described in the technical specification O-RAN.WG4.CUS.0-v05.00 for both FHM and Cascade modes. The "copy" functionality is used in the downlink, as illustrated in FIG. 8. For FHM mode 8001, the FHM retrieves eCPRI messages coming from O-DU as payload of Ethernet frames, copies them (without any modifications) as payload into Ethernet frames, and sends them towards all the O-RUs in the Shared Cell Group. For Cascade mode 8002, the cascaded O-RU retrieves eCPRI messages coming from the north-node as payload of Ethernet frames, copies them (without any modifications) as payload into Ethernet frames, and sends them towards the south-node. The functionality illustrated in FIG. 8 can be implemented, e.g., in accordance with the technical specification O-RAN.WG4.CUS.0-v05.00.

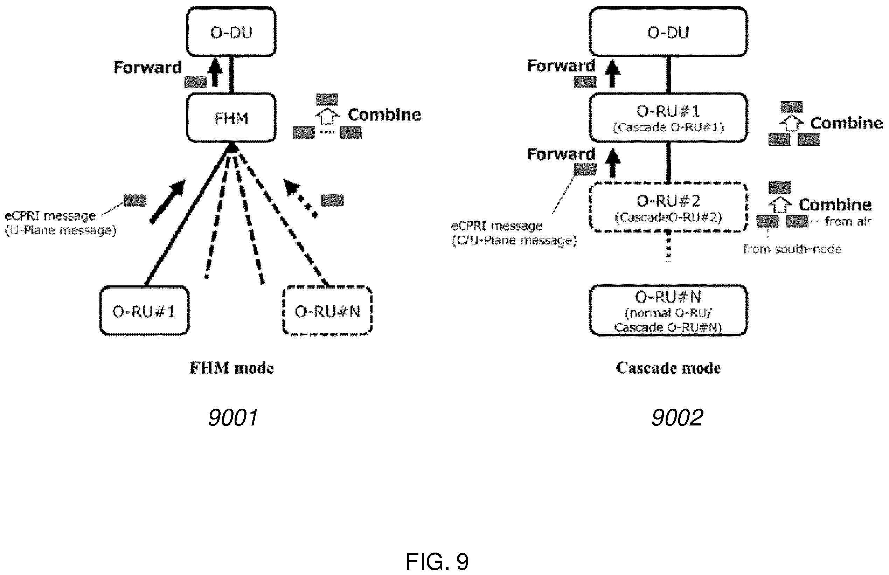

The "combine" functionality is used in the uplink, as illustrated in FIG. 9. For FMH mode 9001, the FHM combines IQ data corresponding to the same radio resource element from the multiple eCPRI messages from each O-RU. After combining, the FHM generates eCPRI header, adds the combined IQ data as eCPRI message body, constructs Ethernet frames carrying eCPRI messages as payload, and forwards them to the O-DU. For Cascade mode 9002, the cascaded O-RU combines IQ data corresponding to the same radio resource element received from i) the air interface and ii) the eCPRI messages transmitted from the south-node. After combining, the cascaded O-RU generates eCPRI header, adds combined IQ data as eCPRI message body, constructs Ethernet frames carrying eCPRI messages as payload, and forwards them to the north-node. The functionality illustrated in FIG. 9 can be implemented, e.g., in accordance with the technical specification O-RAN.WG4.CUS.0-v05.00.

### BRIEF DESCRIPTION OF THE FIGURES

FIG. 1 shows the main components of the CBRS architecture.
FIG. 2 shows a Grant state machine.
FIG. 3 shows the CBRS procedures.
FIG. 4 shows the O-RAN high level logical architecture.
FIG. 5 shows the Non-RT RIC domain.
FIG. 6 depicts the ORAN Shared Cell concept configured in FrontHaul Multiplexer (FHM) mode.
FIG. 7 depicts the ORAN Shared Cell concept configured in Cascade mode.
FIG. 8 illustrates the "copy" functionality of shared cells.
FIG. 9 illustrated the "combine" functionality of shared cells.
FIG. 10 shows the SC Controller deployed as part of the Non-RT RIC as an "rApp".
FIG. 11 shows the SC Controller deployed as part of the O-RU Controller.
FIG. 12 shows the SC Controller deployed as part of the CBSD Controller.

### DETAILED DESCRIPTION

As an example embodiment, a wireless communications system containing one or more Shared Cell Groups, operating in CBRS spectrum, and interfacing with the Spectrum Access System (SAS) is provided. The example embodiment of the wireless communication system can include, e.g., the following:
- Radio components (O-RU, O-DU, O-CU),
- ORAN Non-Real-Time RAN Intelligent Controller (Non-RT RIC) framework,
- ORAN Near-Real-Time RAN Intelligent Controller (Near-RT RIC) framework,
- System Management and Orchestrator (SMO) Framework,
- O-RU Controller, which configures and manages the O-RUs,
- CBSD Controller, which interfaces with a Spectrum Access System (SAS) using the Wireless Innovation Forum (WINNF) CBSD-SAS Interface,
- A Shared Cell operating in FrontHaul Multiplexer (FHM) mode, and
- Shared Cell (SC) Controller.

The O-RU Controller is defined in the technical specification O-RAN.WG4.MP.0-v05.00 as a network function that is permitted to control the configuration of an O-RU. Examples of O-RU controllers include, an O-DU, a classical Network Management System (NMS), an O-RAN Service Management and Orchestration (SMO) function, or other network automation platforms. Although the O-RU Controller is assumed to be part of the SMO in the present disclosure for the sake of simplicity, the present disclosure is not intended to be limited in such manner, and the present disclosure is applicable to any system containing an O-RU Controller, deployed in any suitable fashion.

The CBSD Controller can be implemented, e.g., as an application that serves as the interface of the O-RUs with the Spectrum Access System (SAS), using the Wireless Innovation Forum (WINNF) CBSD-SAS Interface. The CBSD Controller may include Domain Proxy (DP) functionality as well as Radio Resource Management (RRM) functionality (e.g., channel selection based on spectrum availability). The CBSD Controller can be an application belonging to the Non-RT RIC, as an "rApp". In the present disclosure, the CBSD Controller entity is utilized in the example embodiment, but the present disclosure is equally applicable for the case where a Domain Proxy is used instead of the CBSD Controller. Additionally, for the purpose of explaining the ideas herein, we will assume the CBSD Controller/DP is deployed as an rApp. However, the present disclosure is equally applicable in case a different deployment for the CBSD Controller/DP is chosen.

As the spectrum is reused by all O-RUs in a Shared Cell group, the spectrum is shared among all the UEs that are communicating using the O-RUs in that group.

The Shared Cell (SC) Controller is an entity that uses information about available spectrum (received from SAS) and current network conditions, including Signal to Noise ratio (SNR), Signal to Interference Ratio, and other information to decide on the best Shared Cell Group configuration for the system. The decisions that the SC Controller can implement include:
1) Initial configuration of a Shared Cell Group (i.e., which O-RUs belong to each shared cell Group when the system starts-up);
2) Reconfiguration of Shared Cell Groups by adding and/or removing O-RUs to an existing Shared Cell Group;
3) Creation of new Shared Cell Groups during regular system operation;
4) Adding channels (i.e., component carriers) in a Shared Cell Group;
5) Removing/releasing channels (i.e., component carriers) in a Shared Group.

Such decisions (as those outlined above) that can be taken by the SC Controller are not necessarily CBRS specific. However, the dynamic nature of the channel allocation in the CBRS system makes CBRS a great candidate to take advantage of this solution. Systems using licensed spectrum tend to follow a deployment plan, and not be dynamic in natured. Such systems tend to have predetermined and fixed configurations. However, the solution described herein can be applied to any wireless system using the Shared Cell grouping concept, or a similar concept, such as a Distributed Antenna System (DAS).

As an example, if a CBSD is allocated a given CBRS spectrum, e.g., a 10MHz channel, this channel may be sufficient at the time of allocation to be shared with all O-RUs in the SC group. However, if the traffic in the cell increases (e.g., due to more users being connected, or higher throughput requirements) then the CBSD may ask for more spectrum. If more channels are not granted by the SAS due to unavailability, the SC Controller may choose to split a Shared Cell Group into 2 sub-groups, with each providing their own cells (i.e., separate PCI for each new sub-group), but still reusing the same frequency/channels in each sub-group. This would require the newly formed sub-groups to manage the interference they cause in one another. This can be done, for example, by adjusting antenna patterns. The sub-groups may be joined at a later point in time if more spectrum is available or if the demand decreases. For these reasons, the CBRS system is utilized as the example embodiment in the present disclosure, but the present disclosure is applicable to any system utilizing the ORAN Shared Cell concept or similar concept such as DAS.

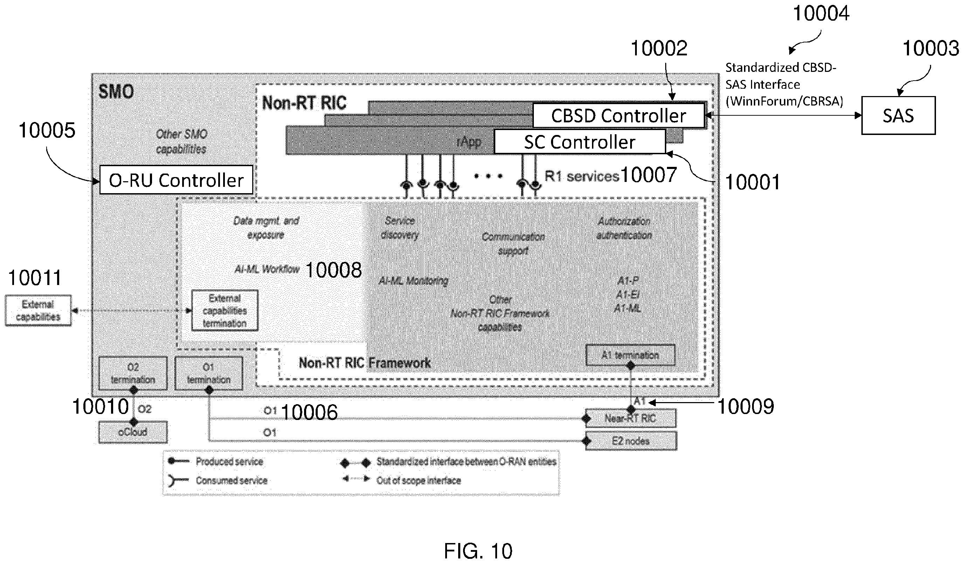

In one example embodiment, a SC Controller is implemented and deployed as part of the Non-RT RIC. This is depicted in FIG.10, where it is exemplified as an "rApp" 10001 in the Non-RT RIC domain. The SC Controller ("rApp") 10001 interfaces with the CBSD Controller 10002, which in turn exchanges information with the SAS 10003 through Winn Forum and CBRS Alliance standardized interface, i.e., CBSD-SAS interface 10004. The SC Controller 10001 sends the Shared Cell Group information to the O-RU Controller 10005 so that the O-RU Controller 10005 can configure the radio components (i.e., O-RU, O-DU, O-CU).

In order to assist SC Controller 10001 to make decisions on Shared Cells Group configuration, measurements provided by the radio components (i.e., O-RU, O-DU, O-CU) to the SMO via the O1 interface 10006 may be used. The measurements to be provided via O1 are specified in the technical specifications 3GPP TS 28.552 and TS 36.425. These measurements may then be provided to the SC Controller via the R1 interface 10007. These measurements are not CBRS specific and they are defined in the 3GPP specifications for LTE and 5G-NR systems, whether or not CBRS is the specific spectrum that is utilized.

The following radio resource utilization measurements may be provided to the SC Controller via the R1 (services) interface 10007, e.g.:
- Downlink (DL) Total Physical Resource Block (PRB) Usage,
- Uplink (UL) Total PRB Usage,
- Distribution of DL Total PRB Usage,
- Distribution of UL total PRB usage,
- DL PRB used for data traffic,
- DL total available PRB,
- UL PRB used for data traffic,
- UL total available PRB, and
- Random Access Channel (RACH) Usage.

The following cell load measurements may be provided to the SC Controller via the R1 interface 10007, e.g.:
- Average number of Active User Equipments (UEs) in the DL per cell,
- Max number of Active UEs in the DL per cell,
- Average number of Active UEs in the UL per cell, and
- Max number of Active UEs in the UL per cell.

One or more of the following signal quality measurement may be provided to the SC Controller via the R1 interface 10007, e.g.:
- Signal to Interference and Noise Ratio (SINR),
- Reference Signal Receive Power (RSRP), and
- Reference Signal Received Quality (RSRQ).

In addition, these and other measurements may be used by the Non-RT RIC to predict future radio resource and cell conditions using Artificial Intelligent (AI)/ Machine Learning (ML) 10008, as shown in FIG. 10. The predictions can then be passed to the SC Controller 10001 via the R1 (services) interface 10007. Information may also be provided from the Near-RT RIC through the A1 interface 10009.

Information regarding the O-RUs in a Shared Cell Group need also be considered in the SC Controller decision process. This includes, e.g.:
- O-RU capabilities,
- maximum transmit power,
- maximum number of carriers that can be supported,
- maximum bandwidth per component carrier,
- O-RU operational parameters,
- Geographical location (latitude, longitude, altitude), and
- Antenna configuration.

Policies may be provided to the SC Controller 10001 from the O2 interface 10010 (coming from the cloud), from External sources via the "External Capabilities" interface 10011, or via other means such as direct input from network operator technician via a GUI. Policies may include, e.g.:
- Maximizing cell throughput,
- Maximizing UE throughput,
- Minimizing interference, and
- Maximizing the number of active UEs that can be supported in a cell.

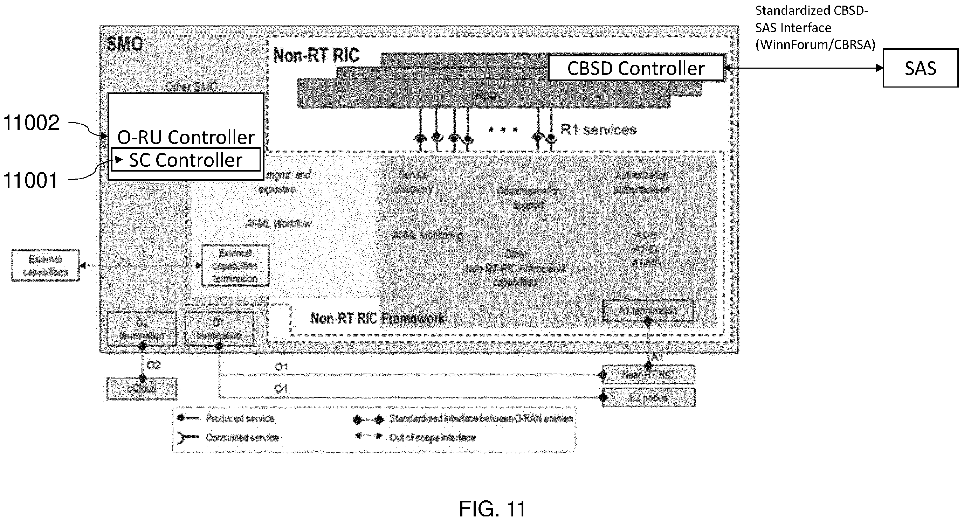

FIG. 11 shows another example embodiment, in which the SC Controller 11001 is included as a function or application as part of the O-RU Controller 11002.

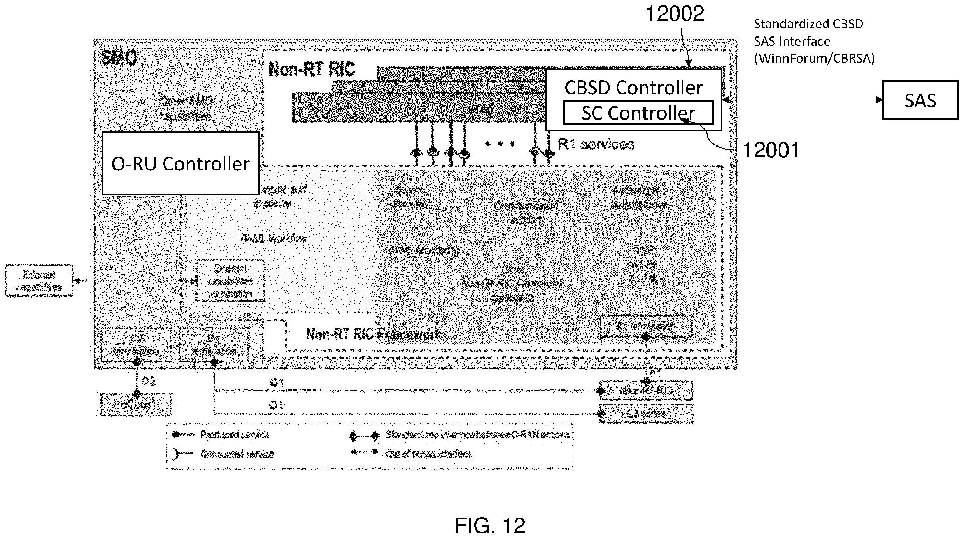

FIG. 12 shows another example embodiment, in which the SC Controller 12001 is included as a function or application as part of the CBSD Controller 12002.

In accordance with the present disclosure, at the system startup, the SC Controller (e.g., 10001 of FIG. 10, 11001 of FIG. 11, or 12001 of FIG. 12) creates the initial SC Groups and provide the information to the O-RU Controller. The O-RU controller configures the radio components (O-RU, O-CU and O-DU) with the information provided. The information on the channels for each of the SC Groups is obtained from the CBSD Controller, which is the entity interacting with the SAS. The SC Group configuration information is provided via the R1 Interface, and it can include, e.g.:
- Shared Cell Group (SCG) Identity,
- List of O-RUs belonging to this SCG,
- List of component carriers (channels) assigned to this SCG, including, e.g.:
   o Minimum frequency,
   o Maximum frequency, and
   o Maximum transmit power or EIRP.

During regular system operation, the SC Controller will make decisions related to SC Group modification. The SC Controller may add more channel to the group, relinquishing unused spectrum, split groups or combine groups.

The SC Controller may decide to split an SC Group into two or more groups, where each group operates in a different spectrum/channel. This allows the increase in system capacity and increase in the number of more active users that can be supported in the system.

The SC Controller may decide to split an SC Group into two or more groups, where each group operates in the same spectrum. This can be beneficial if the O-RUs in the original group are not able to properly synchronize, which makes it difficult for the FHM to combine the data received from the O-RUs in the group. This solution depends on the location of the O-RUs, otherwise there may be an increase on cell edge interference.

The SC Controller may decide to combine two or more SC Groups, creating a single group. This may be beneficial if there is a scarcity of radio resources, e.g., if the SAS can only assign a single channel/component carrier in a given geographical area, then it may be beneficial to combine all O-RUs into a single group. This solution may be utilized only if the O-RUs are near each other, e.g., maybe several O-RUs in the same floor of a building. Additionally, all the O-RUs need to be connected by the same FHM or in cascade mode.

When the SC Controller decides to modify the group, it will interact with the CBSD Controller and the O-RU Controller.

If the SC Controller wants to add a component carrier to the group, it will ask the CBSD Controller to acquire a grant from the SAS. It will provide the RU Identity or CBSD Identity, the number of component carriers being asked and the bandwidth of the component carrier. After successfully acquiring the grant from the SAS, the CBSD Controller sends the information to the SC Controller. The SC Controller passes the information to the O-RU Controller which then configures the radio components. Similar process is also followed if the SC Controller wants to relinquish a channel or make a modification (i.e., remove a channel and then add a new channel).

Exemplary messages for the communication between the SC Controller and the CBSD Controller may be as follows:
From SC Controller to CBSD Controller: **scCarrierRequestArray**

### scCarrierRequestArray:

| Parameter | Description |
|---|---|
| NAME: scCarrierRequestArray | Array of scCarrierRequest objects. |
| DATA TYPE: array of object: scCarrierRequest | |

### scCarrierRequest Object:

| Parameter | | Description |
|---|---|---|
| NAME: ruId | Required | O-RU Identity |
| DATA TYPE: string | | |
| NAME: numberOfComponentCarrier | Required | Number of CC being requested |
| DATA TYPE: integer | | |
| NAME: | Required | In MHz |
| bandwidthPerComponentCarrier | | |
| DATA: integer | | |
| NAME: scGroupId | Required | All the O-RUs that are part of the same SC Group shall be assigned the same SC Group ID. The SC Group ID may map directly into the CBRS Co-existence Groups defined by CBRS Alliance or WINN Forum Common Channel Group (CCG) or Single Frequency Group (SFG) |
| DATA TYPE: string | | |
| NAME: | Optional | Interference Coordination Group (ICG) or Spectrum Reuse Group (SRG) Identity. This is a group of RU's that will not cause interference issues to each other if they use spectrum grants with the same frequency range. They do not have to use spectrum with the same frequency range. |
| interferenceCoordinationGroup | | |
| DATA TYPE: string | | |

From CBSD Controller to SC Controller: **scCarrierResponseArray scCarrierResponseArray**:

| Parameter | Description |
|---|---|
| NAME: scCarrierResponseArray | Array of scCarrierResponse objects. |
| DATA TYPE: array of object: scCarrierResponse | |

### scCarrierResponse Object:

| Parameter | R/O/C | Description |
|---|---|---|
| NAME: ruId | Required | O-RU Identity |
| DATA TYPE: string | | |
| NAME: listofCarriers | Conditional | This parameter is an array of zero or more data objects, Granted Carrier, which describes a channel that is available for the O-RU. Included: If and only if the parameter Response is success. |
| DATA TYPE: array of object: carrierInfo | | |
| NAME: response | Required | This parameter includes information on whether the corresponding O-RU request is approved or disapproved. |
| DATA TYPE: enumerated: success, fail | | |

### The carrierInfo Object:

| Parameter | R/O/C | Description |
|---|---|---|
| NAME: lowFrequency | Required | This parameter is the low frequency of the frequency range granted |
| DATA TYPE: number | | |
| NAME: highFrequency | Required | This parameter is the high frequency of the frequency range granted |
| DATA TYPE: number | | |
| NAME: maxEirp | Optional | Maximum EIRP likely to be permitted for a Grant on this frequency range, given the O-RU/CBSD registration parameters, including location, antenna orientation and antenna pattern. The maximum EIRP is in the units of dBm/MHz and is an integer or a floating point value between -137 and +37 (dBm/MHz) inclusive. |
| DATA TYPE: number | | |

After getting the successful response from the CBSD Controller, the SC Controller will pass the information to the O-RU Controller for re-configuration of the radio components. Exemplary messages for the communication between the SC Controller and the O-RU Controller may be as follows:
From SC Controller to O-RU Controller: **scInformationArray**

### scInformationArray:

| Parameter | Description |
|---|---|
| NAME: scInformationArray | Array of scInformation objects. Each object represent the information for the O-RU Controller. |
| DATA TYPE: array of object: scInformation | |

### scInformation Object:

| Parameter | | Description |
|---|---|---|
| NAME: ruId | Required | O-RU Identity |
| DATA TYPE: string | | |
| NAME: Carriers to Add | Optional | |
| DATA TYPE: array of object: carrierInfo | | |
| NAME: Carriers to Remove | Optional | |
| DATA TYPE: array of object: carrierInfo | | |
| NAME: scGroupId | Required | Common Channel Group (CCG) or Single Frequency Group (SFG) Identity is a same frequency group which is a group of O-RU's that have to use spectrum grants with the same frequency range. A Same Frequency group can be viewed as a subset of a Frequency Reuse group. |
| DATA TYPE: string | | |
| NAME: | Optional | Interference Coordination Group (ICG) or Spectrum Reuse Group (SRG) Identity. This is a group of RU's that will not cause interference issues to each other if they use spectrum grants with the same frequency range. They do not have to use spectrum with the same frequency range. |
| interferenceCoordinationGroup | | |
| DATA TYPE: string | | |

## Claims

1. A wireless communications system operating in Citizens Broadband Radio Service (CBRS) spectrum in an Open Radio Access Network (ORAN) environment having radio components including at least one of an ORAN Radio Unit (O-RU), ORAN Distributed Unit (O-DU), and ORAN Centralized Unit (O-CU), comprising:
an interface entity interfacing with a Spectrum Access System (SAS), wherein the interface entity is one of a CBRS Device (CBSD) Controller or a Domain Proxy (DP);
a radio controller responsible for radio management and configuration, wherein the radio controller is configured as an O-RU controller;
a shared cell (SC) controller; and
a radio resource management functionality configured as part of one of i) a Non-Real Time Radio Intelligent Controller (Non-RT RIC) or ii) a Near Real Time Radio Intelligent Controller (Near-RT RIC).

2. The system according to claim 1, wherein the SC controller is an entity responsible for at least one of SC configuration and reconfiguration information including at least one of the following:
initial configuration of an SC group, including configuring which O-RUs belong to the SC group when the system starts up;
channel configuration for the SC group;
setting maximum transmit power in downlink (DL) for all O-RUs in the SC group;
reconfiguration of the SC group by at least one of adding and removing O-RUs to the SC group;
creation of a new SC group during regular system operation;
adding channels in the SC group; and
at least one of removing and releasing channels in the SC group.

3. The system according to claim 2, wherein the SC controller uses at least one of the following network performance indicators to make decisions on SC group configuration:
downlink (DL) total physical resource block (PRB) usage;
uplink (UL) uotal PRB usage;
distribution of DL total PRB usage;
distribution of UL total PRB usage;
DL PRB used for data traffic;
DL total available PRB;
UL PRB used for data traffic;
UL total available PRB;
random cccess channel (RACH) ssage;
average number of active user equipments (UEs) in the DL per cell;
maximum number of active UEs in the DL per cell;
average number of active UEs in the UL per cell;
maximum number of active UEs in the UL per cell;
signal-to-interference-and-noise ratio (SINR);
reference signal receive power (RSRP); and
reference signal received quality (RSRQ).

4. The system according to claim 3, where the SC controller uses the at least one of the network performance indicators to at least one of infer and predict at least one of future radio resource and cell conditions using at least one of artificial intelligence (AI) and machine learning (ML).

5. The system according to claim 2, wherein the SC controller uses O-RU capabilities and O-RU operational parameters to make a decision regarding at least one of the following SC group configurations:
maximum transmit power;
maximum number of carriers that can be supported;
maximum bandwidth per component carrier;
geographical location information including at least one of latitude, longitude, and altitude; and
antenna configuration.

6. The system according to claim 2, wherein the SC controller uses policies provided from at least one of i) the cloud via O-RAN O2 interface, ii) an external source via O-RAN External Capabilities Interface, or iii) direct input from network operator via a graphic user interface (GUI), the policies including at least one of the following:
maximizing cell throughput;
maximizing UE throughput;
minimizing interference; and
maximizing the number of active UEs that can be supported in a cell.

7. The system according to claim 1, wherein the SC controller is included in the system as an application in the Non-RT RIC domain.

8. The system according to claim 2, wherein the SC controller interfaces with one of the CBSD Controller or the DP.

9. The system according to claim 2, wherein the SC controller interfaces with a radio controller responsible for radio management and configuration.

10. The system according to claim 2, wherein the SC group configuration and reconfiguration information are provided to the O-RU controller via O-RAN R1 interface.

11. The system according to claim 3, wherein the at least one of the network performance indicators is provided to the SC controller via O-RAN R1 interface.

12. The system according to claim 1, wherein the SC controller is included in the system as one of a function or application as part of the O-RU controller.

13. The system according to claim 1, wherein the SC controller is included in the system as one of a function or an application as part of the CBSD Controller.

14. The system of claim 13, wherein the SC group configuration and reconfiguration information are provided to the O-RU controller via ORAN R1 interface.

15. The system according to claim 7, wherein the SC controller is included in the system as an rApp in the Non-RT RIC domain.

16. The system according to claim 9, wherein the SC controller interfaces with the O-RU Controller.

17. The system according to claim 8, wherein the SC controller sends to the CBSD an SC carrier request object including at least one of the following information:
O-RU identity;
number of component carriers requested;
bandwidth per component carrier in MHz;
SC group identification (ID) to which the O-RU is assigned; and
one of Interference Coordination Group (ICG) or Spectrum Reuse Group (SRG) Identity identifying a group of RUs that will not cause interference with one another other in the case the group of RUs use a spectrum grant with the same frequency range.

18. The system according to claim 1, wherein the SC controller is an entity responsible for at least one of SC configuration and reconfiguration information, and wherein the SC controller uses O-RU capabilities and O-RU operational parameters to make a decision regarding at least one of the following SC group configurations:
maximum transmit power;
maximum number of carriers that can be supported;
maximum bandwidth per component carrier;
geographical location information including at least one of latitude, longitude, and altitude; and
antenna configuration.

19. The system according to claim 1, wherein the SC controller is an entity responsible for at least one of SC configuration and reconfiguration information, and wherein the SC controller uses at least one of the following policies:
maximizing cell throughput;
maximizing UE throughput;
minimizing interference; and
maximizing the number of active UEs that can be supported in a cell.

20. The system according to claim 1, wherein the SC controller is an entity responsible for at least one of SC configuration and reconfiguration information, and wherein at least one of:
i) the SC controller is included in the system as an application in the Non-RT RIC domain; and
ii) the SC controller interfaces with one of the CBSD Controller or the DP.
